# EUROPÄISCHE PATENTANMELDUNG

(11) **EP 0 676 843 A1**
(43) Veröffentlichungstag der Anmeldung: **11.10.1995**
(21) Anmeldenummer: 94105436.3
(22) Anmeldetag: 08.04.1994
(51) Int. Cl.: H02G 5/06

(54) **Stützisolator mit Aussenring**

(71) Anmelder: ABB Management AG, CH-5401 Baden (CH)
(72) Erfinder: Kölbl, Gustav, CH-8910 Affoltern a.A. (CH); Vrana, Ales, CH-8805 Richterswil (CH)

(57) **Zusammenfassung**

Der Stützisolator (1) ist versehen mit einem Aussenring (4), mit einem scheibenförmigen Isolatorkörper (2) aus gehärtetem Giessharz und mit mindestens einer mit Hochspannung beaufschlagten, in den Isolatorkörper (2) eingegossenen Eingussarmatur (3). Der Stützisolator (1) ist für den Einbau zwischen zwei Anschlussflansche (25,26) einer gasisolierten Schaltanlage vorgesehen.

Es soll ein für vergleichsweise hohe mechanische Belastungen ausgelegter Stützisolator (1) geschaffen werden, der einfach aufgebaut ist und dessen Aussenring erst nachdem er definitiv farbbehandelt wurde mit dem Isolatorkörper zusammengebaut wird. Der Stützisolator (1) wird erst bei der Montage der gasisolierten Schaltanlage zusammengesetzt. Dies wird dadurch erreicht, dass der Aussenring (4) des Stützisolators (1) aus mindestens zwei identisch ausgebildeten Ringen (5) formschlüssig zusammengefügt ist, und dass der Aussenring (4) vom Isolatorkörper (2) trennbar ausgebildet ist.

## Beschreibung

### TECHNISCHES GEBIET

Die Erfindung geht aus von einem Stützisolator mit Aussenring gemäss dem Oberbegriff des Patentanspruchs 1.

### STAND DER TECHNIK

Aus der Europäischen Patentschrift 0 288 715 B1 ist ein scheibenförmig ausgebildeter Stützisolator mit einem Isolatorkörper bekannt, der für den Einsatz in gasisolierten Schaltanlagen vorgesehen ist. Der Isolatorkörper ist mit einem Druckmittel beaufschlagbar. Als Druckmittel sind Isoliergase wie beispielsweise SF₆ oder auch Mineralöl vorstellbar. Ferner könnte der Isolator auch mit einem Vakuum beaufschlagt werden. Der scheibenförmig ausgebildete Isolatorkörper besteht aus einem gehärteten Giessharz. Durch den Isolatorkörper führt eine Eingussarmatur, die im Betrieb als Stromleiter dient und die mit Hochspannung beaufschlagt ist. Der scheibenförmige Isolatorkörper ist aussen mit einem metallischen Aussenring versehen. In der Regel sind die Eingussarmatur und der Aussenring mit dem Isolatorkörper zu einem einstückig ausgebildeten Stützisolator vergossen.

Die der Eingussarmatur abgewandte Seite des Aussenrings ist ein Teil der äusseren Oberfläche der gasisolierten Schaltanlage und muss der farblichen Gestaltung dieser Oberfläche angepasst werden. Dieses Anpassen bedingt ein Lackieren dieser Oberfläche, welches jedoch erst nach dem bei vergleichsweise hohen Temperaturen erfolgenden Aushärten des Isolatorkörpers nach dem Giessvorgang erfolgen kann, da die für die Oberfläche verwendeten Lacke diesen hohen Temperaturen nicht standhalten. Vor dem Lackieren muss die zu lackierende Fläche entfettet werden, was zweckmässigerweise durch eine Behandlung mit einem flüssigen Lösungsmittel erfolgt. Es wird ein Lösungsmittel gewählt, welches den Isolatorkörper nicht angreift, es kann jedoch nur mit vergleichsweise grossem Aufwand verhindert werden, dass dabei eine gewisse, vom Lösungsmittel herrührende Feuchtigkeit in den Isolatorkörper eindringt, was seine dielektrischen Fähigkeiten reduzieren würde. Beim Lackiervorgang könnten zudem Lackspritzer die Oberfläche des Stützisolators unzulässig verschmutzen, sodass ein aufwendiges Abdecken der Isolatoroberfläche nötig ist.

### DARSTELLUNG DER ERFINDUNG

Die Erfindung, wie sie in den unabhängigen Ansprüchen definiert ist, löst die Aufgabe, einen Stützisolator zu schaffen, der einfach aufgebaut ist und dessen Aussenring erst nachdem er definitiv farbbehandelt wurde mit dem Isolatorkörper zusammengebaut wird.

Der Stützisolator weist einen Aussenring und einen scheibenförmigen Isolatorkörper aus gehärtetem Giessharz mit mindestens einer mit Hochspannung beaufschlagten, in den Isolatorkörper eingegossenen Eingussarmatur auf. Der Stützisolator ist für den Einbau zwischen zwei Anschlussflansche einer gasisolierten Schaltanlage vorgesehen. Bei diesem Stützisolator erweist es sich als besonders vorteilhaft, dass der Aussenring aus mindestens zwei identisch ausgebildeten Ringen formschlüssig zusammengefügt ist, und dass der Aussenring zudem vom Isolatorkörper trennbar ausgebildet ist. Aufgrund dieser Ausgestaltung ist es möglich, den Aussenring erst nachdem er definitiv farbbehandelt wurde mit dem Isolatorkörper zusammenzubauen.

Ferner erweist es sich als vorteilhaft, dass die mindestens zwei Ringe mit Mitteln versehen sind, welche den Isolatorkörper radial positionieren, und dass die mindestens zwei Ringe zudem mit Mitteln versehen sind, welche den Isolatorkörper behelfsmässig axial positionieren. Für die definitive axiale Positionierung des Isolatorkörpers sind mit den Anschlussflanschen zusammenwirkende, an den Isolatorkörper angeformte Anschläge vorgesehen. Durch diese Anordnung wird vermieden, dass zwischen dem Aussenring und dem Isolatorkörper axial gerichtete Scherkräfte übertragen werden.

Eine besonders einfache radiale Positionierung des Isolatorkörpers ist möglich, wenn als Mittel, welche den Isolatorkörper radial positionieren, Nocken vorgesehen sind, die innen an die Ringe des Aussenrings angeformt sind. Als Mittel, welche den Isolatorkörper behelfsmässig axial positionieren, ist jeweils ein innen an den jeweiligen Ring angeformter Bund vorgesehen.

Besonders vorteilhaft wirkt es sich aus, dass die auf den Stützisolator einwirkende Kerbwirkung dadurch reduziert wird, dass der an die Ringe angeformte Bund zusammen mit einer dem Bund zugewandten Flanke des jeweiligen Anschlags eine für die Aufnahme eines Dichtungselements geeignete Nut bildet. Diese Nut braucht also nicht mehr vollständig in den Isolatorkörper eingelassen werden, wie dies bei herkömmlichen Stützisolatoren in der Regel der Fall ist.

Die Ringe weisen mindestens eine Symmetrieachse auf. Zwei der Ringe sind miteinander formschlüssig verbindbar, wenn der eine Ring gegenüber dem anderen Ring um 180° um die mindestens eine Symmetrieachse gedreht wird.

Die weiteren Ausgestaltungen der Erfindung sind Gegenstände der abhängigen Ansprüche.

Die Erfindung, ihre Weiterbildung und die damit erzielbaren Vorteile werden nachstehend anhand der Zeichnung, welche lediglich einen möglichen Ausführungsweg darstellt, näher erläutert.

### KURZE BESCHREIBUNG DER ZEICHNUNG

Es zeigen:
Fig.1 eine schematisch dargestellte Seitenansicht einer ersten Ausführungsform eines scheibenförmig ausgebildeten Stützisolators,
Fig.2 eine schematisch dargestellte Ansicht eines Teiles eines Aussenrings eines scheibenförmigen Stützisolators,
Fig.3 einen schematisch dargestellten Teilschnitt durch eine erste Ausführungsform eines scheibenförmig ausgebildeten Stützisolators,
Fig.4 einen schematisch dargestellten ersten Teilschnitt durch einen in eine gasisolierte Schaltanlage eingebauten scheibenförmig ausgebildeten Stützisolator, und
Fig.5 einen schematisch dargestellten zweiten Teilschnitt durch einen in eine gasisolierte Schaltanlage eingebauten scheibenförmig ausgebildeten Stützisolator.

Bei allen Figuren sind gleich wirkende Elemente mit gleichen Bezugszeichen versehen. Alle für das unmittelbare Verständnis der Erfindung nicht erforderlichen Elemente sind nicht dargestellt.

### WEGE ZUR AUSFÜHRUNG DER ERFINDUNG

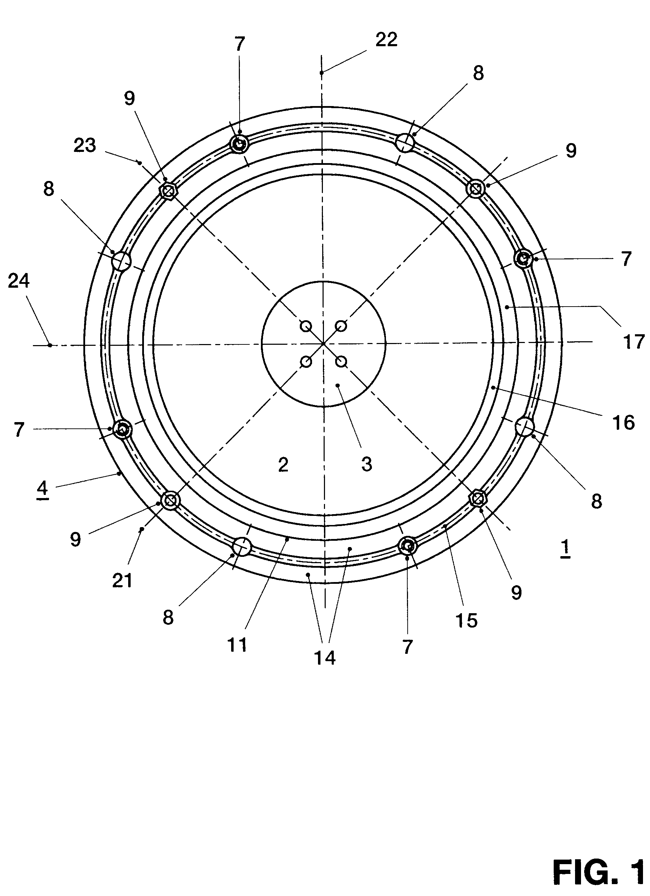

Die Fig.1 zeigt eine schematisch dargestellte Seitenansicht eines scheibenförmig ausgebildeten Stützisolators 1, wie er beispielsweise in einphasig gasisolierten Schaltanlagen eingesetzt wird, um die Aktivteile gegen die geerdete Kapselung abzustützen, und um benachbarte Gasräume gegeneinander abzuschotten. Dieser Stützisolator 1 weist einen Isolatorkörper 2 aus Giessharz auf, in den eine Eingussarmatur 3 eingegossen ist. Für dreiphasig gasisolierte Schaltanlagen werden drei entsprechend voneinander beabstandete Eingussarmaturen 3 in den Isolatorkörper eingegossen. Sollen die benachbarten Gasräume nicht gegeneinander abgeschottet werden, so weist der Isolatorkörper 2 des Stützisolators 1 einen oder mehrere Durchbrüche auf. Der hier scheibenförmig ausgebildete Isolatorkörper 2 wird aussen durch einen zweiteiligen Aussenring 4 gehalten. Der Isolatorkörper 2 kann anstelle einer Scheibenform auch irgendeine andere flächenhafte Ausgestaltung aufweisen, so kann er beispielsweise, wenn ein grösserer Oberflächenkriechweg gefordert ist, auch trichterförmig ausgebildet sein.

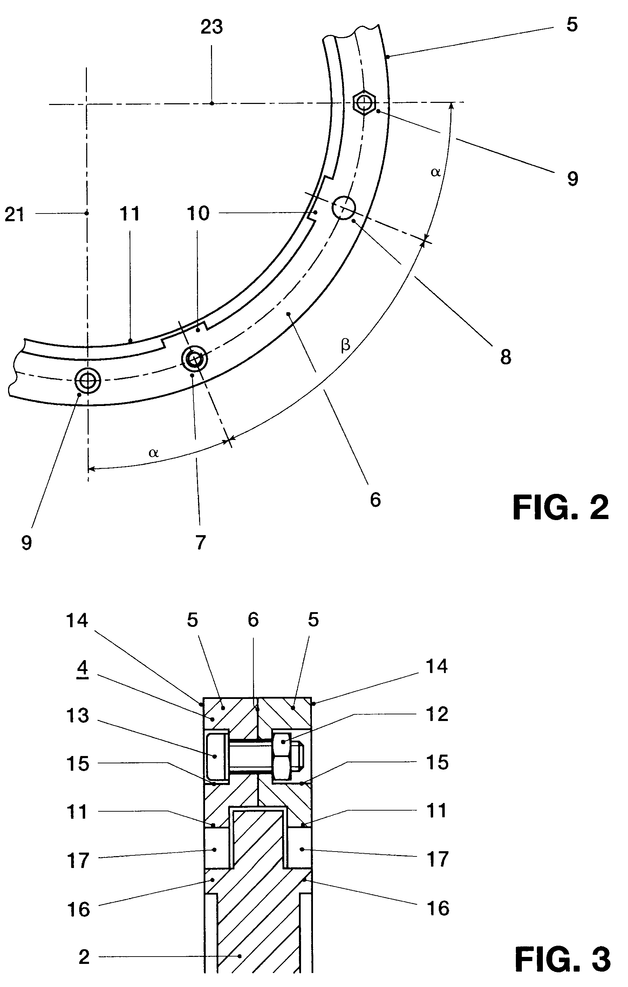

Der Aussenring 4 ist aus zwei gleichen metallischen Ringen 5 aufgebaut. Die Ringe 5 werden vorteilhaft aus einer Aluminiumlegierung gegossen. Die Fig.2 zeigt ein schematisch dargestelltes Segment eines Ringes 5, welches eine Fügefläche 6 aufweist. Dies ist ein Segment des Ringes 5 der unter dem in Fig.1 sichtbaren Ring 5 mit der Fügefläche 6 nach oben liegt. Die Fügefläche 6 wird von senkrecht zu ihr verlaufenden Gewindebohrungen 7 und Durchgangsöffnungen 8 unterbrochen. Ferner sind Montageöffnungen 9 vorgesehen, die ebenfalls die Fügefläche 6 senkrecht durchdringen. In Richtung nach innen auf den Isolatorkörper 2 zu ist die Fügefläche 6 an mehreren Stellen verbreitert, sodass dort Nocken 10 ausgebildet sind, die der Kontur der äusseren Ringfläche des Isolatorkörpers 2 angepasst sind, sodass sie nach dem Einlegen des Isolatorkörpers 2 in den ersten der beiden Ringe dessen radiale Führung übernehmen. Ein an den Ring 5 angeformter Bund 11 verhindert ein axiales Durchtreten des Isolatorkörpers 2 durch diesen ersten Ring 5. Der zweite der Ringe 5 wird nun gegenüber dem ersten Ring 5 um 180° um eine seiner in der Fügefläche 6 liegenden Symmetrieachsen gedreht und dann, nach dem Einlegen des Isolatorkörpers 2 zwischen die beiden Ringe 5, wird er mit diesen zum fertigen Stützisolator 1 zusammengefügt. In Fig.3 ist ein Teilschnitt durch einen derartig montierten Stützisolator 1 dargestellt. Der Teilschnitt ist hier so gelegt, dass er durch eine der Montageöffnungen 9 geht. Der Isolatorkörper 2 ist in dieser Anordnung in axialer Richtung nur behelfsmässig positioniert. Die definitive axiale Positionierung des Isolatorkörpers 2 erfolgt erst dann, wenn der Stützisolator 1 definitiv in die gasisolierte Schaltanlage eingebaut ist. Bei dem Aussenring 4 dieses Stützisolators 1 liegen die jeweiligen Fügeflächen 6 der beiden Ringe 5 aufeinander. Die beiden Ringe 5 werden durch jeweils eine in die Montageöffnungen 9 eingebrachte, mit einer Mutter 12 versehenen Schraube 13 zusammengehalten. Jeder der Ringe 5 weist zudem auf der der Fügefläche 6 gegenüberliegenden Seite eine Auflagefläche 14 auf, die parallel zur Fügefläche 6 angeordnet ist. In die Auflagefläche 14 ist eine Nut 15 eingelassen, die nach dem Einbau des Stützisolators 1 in die gasisolierte Schaltanlage mit einem Korrosionsschutzfett gefüllt wird. Die Nut 15 ist so ausgebildet, dass sie durch die Gewindebohrungen 7, die Durchgangsöffnungen 8 und die Montageöffnungen 9 selbst dann nicht unterbrochen wird, wenn diese Bohrungen bzw. diese Öffnungen mit den Bauelementen bestückt sind für die sie vorgesehen sind.

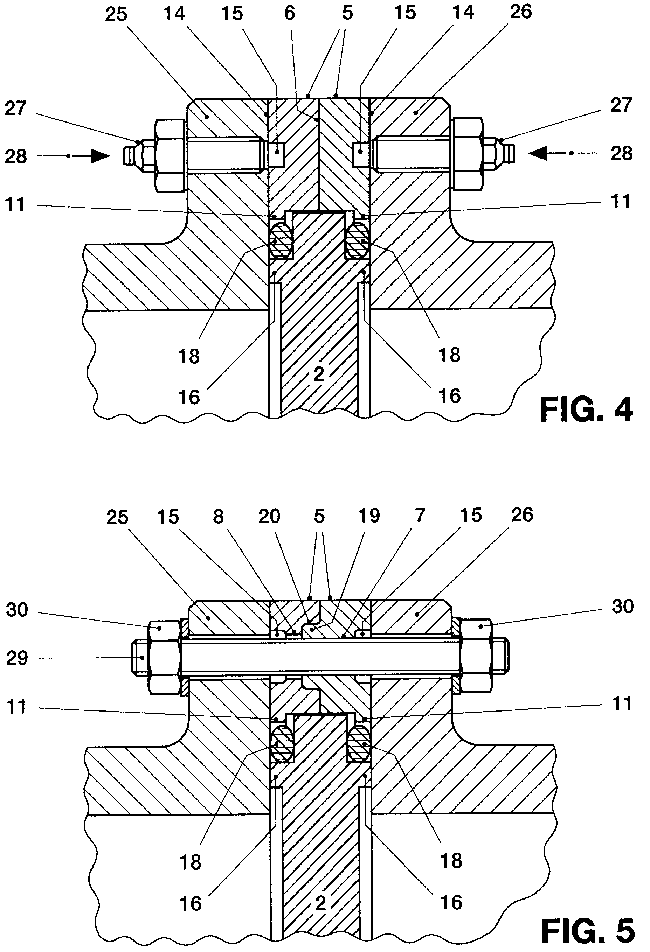

Wie ferner aus der Fig.3 zu sehen ist, weist der Isolatorkörper 2 im äusseren Bereich beidseitig einen umlaufenden Anschlag 16 auf. Zwischen dem Anschlag 16 und dem Bund 11 des Ringes 5 ist auf jeder Seite des Stützisolators 1 eine Nut 17 ausgebildet, die für die Aufnahme einer Rundschnurdichtung 18 vorgesehen ist, wie dies den Fig.4 und 5 zu entnehmen ist. Der an die Ringe 5 angeformte Bund 11 bildet jeweils zusammen mit einer diesem Bund 11 zugewandten Flanke des jeweiligen Anschlags 16 diese Nut 17.

Die Fügefläche 6 weist um die Gewindebohrungen 7 herum jeweils eine erhabene Nocke 19 auf und um die Durchgangsöffnungen 8 weist sie jeweils eine Vertiefung 20 auf. Die Nocke 19 und die Vertiefung 20 passen, wie aus Fig.5 ersichtlich formschlüssig ineinander, wenn sie nach der Drehung des zweiten der Ringe 5 gegenüber dem ersten Ring 5 um 180° um eine der in seiner Fügefläche 6 liegenden Symmetrieachsen 21,22,23,24 in Eingriff geraten. Die beiden Ringe 5, aus denen der Aussenring 4 zusammengefügt ist, sind damit gegen ein gegenseitiges Verdrehen gesichert. Es sind die verschiedensten Ausgestaltungen dieser formschlüssigen Verbindung möglich.

Bei dem in den Fig.1 und 2 gezeigten Ausführungsbeispiel ist zwischen einer Montageöffnung 9 und der naheliegendsten Gewindebohrung 7 ein Winkel α vorgesehen, zwischen der Gewindebohrung 7 und der naheliegendsten Durchgangsöffnung 8 ist ein Winkel β vorgesehen und zwischen der Durchgangsöffnung 8 und der nächsten Montageöffnung 9 ist wieder ein Winkel α vorgesehen. Für dieses Ausführungsbeispiel weist der Winkel α einen Wert von 22,5° und der Winkel β einen Wert von 45° auf. Vier Montageöffnungen 9 sind hier gleichmässig auf den Ringen 5 verteilt. Werden die Symmetrieanforderungen beachtet, so sind auch andere Werte für die Winkel α und β möglich, sodass der Stützisolator 1 für jeden möglichen Durchmesser der Gehäuse von gasisolierten Schaltanlagen ausgelegt werden kann. Bei grösseren Durchmessern kann so insbesondere die aus Gründen der Festigkeit und der Gasdichtheit nötige grössere Anzahl von Flanschverschraubungen untergebracht werden. Es ist auch durchaus möglich, nur einige, sinnvollerweise mindestens zwei der Paarungen von Gewindebohrung 7 und Durchgangsöffnung 8 formschlüssig auszubilden. Ferner scheint es sinnvoll zu sein, die Anzahl der Montageöffnungen 9 nicht grösser als vier zu wählen, allerdings müssen dann, wenn eine grössere Anzahl von Flanschverschraubungen untergebracht werden soll, die Winkel α und β entsprechend variiert werden.

In der Fig.4 ist ein zwischen Anschlussflanschen 25 und 26 der gasisolierten Schaltanlage montierter Stützisolator 1 im Teilschnitt dargestellt. Die Anschlussflansche 25,26 liegen auf den Auflageflächen 14 der Ringe 5 des Aussenrings 4 auf und pressen sie zusammen. Der Bund 11 kann so ausgebildet werden, dass er durch die Anschlussflansche 25,26 nicht beaufschlagt wird. Der Isolatorkörper 2 wird in axialer Richtung nun nicht mehr durch die Ringe 5 gehalten sondern durch die Anschläge 16, die sich auf die Anschlussflansche 25,26 abstützen. Die Toleranzen dieser beschriebenen Flanschverbindung sind entsprechend ausgelegt. In den Anschlussflanschen 25,26 eingeschraubte Fettnippel 27 erlauben das Einspritzen von Korrosionsschutzfett in die Nuten 15. Pfeile 28 deuten den Eintritt des Korrosionsschutzfetts an. Der Vollständigkeit halber soll hier noch erwähnt werden, dass auch die Fügeflächen 6 jeweils vor dem Zusammenfügen der beiden Ringe 5 mit dem Korrosionsschutzfett gefettet werden. Mit Hilfe des Korrosionsschutzfetts wird der Isolatorkörper 2 vollständig gegen die äussere Atmosphäre geschützt, sodass er keine Feuchtigkeit aufnehmen kann, zudem werden dadurch auch etwa mögliche chemische Zersetzungserscheinungen am Isolatorkörper 2 mit grosser Sicherheit vermieden.

Fig.5 zeigt einen zwischen den Anschlussflanschen 25 und 26 der gasisolierten Schaltanlage montierten Stützisolator 1 im Teilschnitt. Der Teilschnitt ist so gelegt, dass er durch eine Gewindebohrung 7 bzw. eine Durchgangsöffnung 8 geht. In die Gewindebohrung 7 ist ein Gewindebolzen 29 eingeschraubt, der die entsprechende Montageöffnung 9 zweiten Rings 5 und die entsprechenden, in den Anschlussflanschen 25,26 vorgesehenen, Befestigungsbohrungen durchdringt. Zwei mit dem Gewindebolzen 29 verschraubte Muttern 30 halten an dieser Stelle die Anschlussflansche 25 und 26 mit dem Stützisolator 1 der gasisolierten Schaltanlage zusammen. Mehrere solcher Gewindebolzen 29 sind auf dem Umfang der Anschlussflansche 25,26 gleichmässig verteilt.

Zur Erläuterung der Wirkungsweise werden nun die Figuren etwas näher betrachtet. Der scheibenförmige Isolatorkörper 2 mit der in ihn eingegossenen Eingussarmatur 3 kann bis unmittelbar vor dem Einbau in die gasisolierte Schaltanlage in einer mit einem die Feuchtigkeit aufnehmenden Mittel versehenen luftdichten Hülle geschützt aufbewahrt werden. Die Ringe 5 des Aussenrings 4 werden separat bearbeitet, entfettet und aussen lackiert. Diese Arbeitsvorgänge können sich nicht nachteilig auf den Isolatorkörper 2 auswirken. Ferner wird der Aussenring 4 separat der vorgeschriebenen Druckprobe unterworfen. Erst unmittelbar vor dem Einbau in die gasisolierte Schaltanlage wird der Isolatorkörper 2 aus der Schutzhülle entnommen und mit den Ringen 5 zu einem Stützisolator 1 komplettiert. Dieser Stützisolator 1 wird nun sofort zwischen die Anschlussflansche 25 und 26 der gasisolierten Schaltanlage eingebaut. Nach dem Festziehen der Flanschverbindungen werden die Nuten 15 unter Druck mit Korrosionsschutzfett gefüllt, sodass der Isolatorkörper 2 gegen zersetzende Umwelteinflüsse geschützt ist. Die vor der Stützisolatormontage erfolgte Einfettung der Fügeflächen 6 mit Korrosionsschutzfett vervollständigt diesen Schutz.

Der durch die Kapselung der einphasig gasisolierten Schaltanlage fliessende Rückstrom fliesst nun einwandfrei vom Anschlussflansch 25 über die Auflagefläche 14 des ersten Ringes 5 und durch diesen hindurch über die Fügeflächen 6 der beiden Ringe 5 in den zweiten Ring 5 und durch diesen und anschliessend durch seine Auflagefläche 14 hindurch in den Anschlussflansch 26. Die in diesem Rückstrompfad nötigen Kontaktkräfte werden durch die Flanschverbindungen aufgebracht. Es wirkt sich besonders vorteilhaft aus, dass der Isolatorkörper 2 vollständig gegenüber diesen Kräften entkoppelt ist.

Die an den Isolatorkörper 2 angeformten Anschläge 16 geben die auf ihn in axialer Richtung einwirkenden Kräfte direkt an die Anschlussflansche 25,26 weiter, sodass der Aussenring 4 mit diesen Kräften nicht beaufschlagt wird. Der Aussenring 4 nimmt lediglich die vom Isolatorkörper 2 in radialer Richtung übertragenen Kräfte auf, welche als vergleichsweise einfach zu beherrschende Druckkräfte über die Nocken 10 auf den Aussenring 4 einwirken. Der Aussenring 4 muss demnach keinerlei Scherkräfte aufnehmen.

Ferner wirkt es sich vorteilhaft aus, dass die beiden Ringe 5 die gleiche Form aufweisen, was eine wesentliche Vereinfachung der Beschaffung und der Lagerhaltung bedeutet.

### BEZEICHNUNGSLISTE

- 1: Stützisolator
- 2: Isolatorkörper
- 3: Eingussarmatur
- 4: Aussenring
- 5: Ring
- 6: Fügefläche
- 7: Gewindebohrung
- 8: Durchgangsöffnung
- 9: Montageöffnung
- 10: Nocken
- 11: Bund
- 12: Mutter
- 13: Schraube
- 14: Auflagefläche
- 15: Nut
- 16: Anschlag
- 17: Nut
- 18: Rundschnurdichtung
- 19: Nocke
- 20: Vertiefung
- 21-24: Symmetrieachsen
- 25,26: Anschlussflansch
- 27: Fettnippel
- 28: Pfeile
- 29: Gewindebolzen
- 30: Mutter
- α,β: Winkel

## Patentansprüche

1. Stützisolator (1) mit einem Aussenring (4), mit einem scheibenförmigen Isolatorkörper (2) aus gehärtetem Giessharz und mit mindestens einer mit Hochspannung beaufschlagten, in den Isolatorkörper (2) eingegossenen Eingussarmatur (3), für den Einbau zwischen zwei Anschlussflansche (25,26) einer gasisolierten Schaltanlage, dadurch gekennzeichnet,
- dass der Aussenring (4) aus mindestens zwei identisch ausgebildeten Ringen (5) formschlüssig zusammengefügt ist, und
- dass der Aussenring (4) vom Isolatorkörper (2) trennbar ausgebildet ist.

2. Stützisolator nach Anspruch 1, dadurch gekennzeichnet,
- dass die mindestens zwei Ringe (5) mit Mitteln versehen sind, welche den Isolatorkörper (2) radial positionieren,
- dass die mindestens zwei Ringe (5) zudem mit Mitteln versehen sind, welche den Isolatorkörper (2) behelfsmässig axial positionieren, und
- dass für eine definitive axiale Positionierung des Isolatorkörpers (2) mit den Anschlussflanschen (25,26) zusammenwirkende, an den Isolatorkörper (2) angeformte Anschläge (16) vorgesehen sind.

3. Stützisolator nach Anspruch 2, dadurch gekennzeichnet,
- dass als Mittel, welche den Isolatorkörper (2) radial positionieren, Nocken (10) vorgesehen sind, die innen an die Ringe (5) angeformt sind, und
- dass als Mittel, welche den Isolatorkörper (2) behelfsmässig axial positionieren, jeweils ein innen an den jeweiligen Ring (5) angeformter Bund (11) vorgesehen ist.

4. Stützisolator nach Anspruch 3, dadurch gekennzeichnet,
- dass der an die Ringe (5) angeformte Bund (11) zusammen mit einer diesem Bund (11) zugewandten Flanke des jeweiligen Anschlags (16) eine für die Aufnahme eines Dichtungselements geeignete Nut (17) bildet.

5. Stützisolator nach Anspruch 4, dadurch gekennzeichnet,
- dass als Dichtungselement eine Rundschnurdichtung (18) vorgesehen ist.

6. Stützisolator nach einem der Ansprüche 1 bis 5, dadurch gekennzeichnet,
- dass die Ringe (5) mindestens eine Symmetrieachse (21,22,23,24) aufweisen, und
- dass zwei der Ringe (5) dann miteinander formschlüssig verbindbar sind, wenn der eine Ring (5) gegenüber dem anderen Ring (5) um 180° um die mindestens eine Symmetrieachse (21,22,23,24) gedreht ist.

7. Stützisolator nach Anspruch 6, dadurch gekennzeichnet,
- dass die formschlüssig verbundenen Ringe (5) mittels mindestens einer lösbaren Verbindung fixiert sind.

8. Stützisolator nach Anspruch 7, dadurch gekennzeichnet,
- dass als die mindestens eine lösbare Verbindung eine mit einer Mutter (12) zusammenwirkende Schraube (13) vorgesehen ist.
